# EUROPÄISCHE PATENTSCHRIFT

(11) **EP 4 248 091 B1**
(45) Veröffentlichungstag und Bekanntmachung des Hinweises auf die Patenterteilung: **30.07.2025**
(21) Anmeldenummer: 21809963.8
(22) Anmeldetag: 08.11.2021
(51) Int. Cl.: F04B 53/16, F04B 1/0408, F04B 1/0439, F16J 15/18, F16J 15/20, F16J 15/3284, F16J 15/328, F16J 15/32, F16J 15/56

(54) **KOLBENPUMPE, INSBESONDERE KRAFTSTOFF-HOCHDRUCKPUMPE FÜR EINE BRENNKRAFTMASCHINE**
PISTON PUMP, IN PARTICULAR HIGH-PRESSURE FUEL PUMP FOR AN INTERNAL COMBUSTION ENGINE
POMPE À PISTON, EN PARTICULIER POMPE À CARBURANT À HAUTE PRESSION POUR UN MOTEUR À COMBUSTION INTERNE

(30) Priorität: 20.11.2020 DE 102020214632
(43) Veröffentlichungstag der Anmeldung: 27.09.2023
(73) Patentinhaber: Robert Bosch GmbH, 70442 Stuttgart (DE)
(72) Erfinder: FLO, Siamend, 71701 Schwieberdingen (DE); NITSCHE, Frank, 71686 Remseck Am Neckar (DE); GIESLER, Jurij, 70825 Korntal (DE); KOCH, Kerstin, 71701 Schwieberdingen (DE); PLISCH, Andreas, 70806 Kornwestheim (DE); UHLENBROCK, Dietmar, 70439 Stuttgart (DE); CAKIR, Ekrem, 71739 Oberriexingen (DE)
(86) Internationale Anmeldenummer: PCT/EP2021/080907
(87) Internationale Veröffentlichungsnummer: WO 2022/106234

(56) Entgegenhaltungen:
- WO-A1-2015/120945
- WO-A1-2019/015862
- DE-A1- 102014 226 304
- DE-A1- 102018 206 312

## Beschreibung

### Stand der Technik

Die Erfindung betrifft eine Kolbenpumpe, insbesondere eine Kraftstoff-Hochdruckpumpe für eine Brennkraftmaschine, nach dem Oberbegriff des Anspruchs 1.

Aus dem Stand der Technik sind Kolbenpumpen bekannt, die bspw. bei Brennkraftmaschinen mit Benzindirekteinspritzung zum Einsatz kommen. Bspw. ist aus WO 2019/015862 A1 eine Kolbenpumpe bekannt, die als Dichtung einen Kunststoffring aufweist.

Ein solcher Kunststoffring wird üblicherweise mittels eines Spritzgussverfahrens (Kunststoffspritzen) hergestellt. Nach dem Kunststoffspritzen bleibt die sogenannte "Spritzhaut" an der Bauteiloberfläche regelmäßig erhalten und wird nicht entfernt. Dadurch sind maßliche Toleranzen am Bauteil nach dem Spritzen relativ gesehen zu mechanischen Bearbeitungsprozessen groß und die tribologischen Eigenschaften der Bauteiloberflächen sind unterschiedlich.

Eine weitere Kolbenpumpe ist aus der DE 10 2018 206 312 A1 bekannt.

### Offenbarung der Erfindung

Das der Erfindung zugrunde liegende Problem wird durch eine Kolbenpumpe mit den Merkmalen des Anspruchs 1 gelöst. Vorteilhafte Weiterbildungen der Erfindung sind in den Unteransprüchen genannt.

Die erfindungsgemäße Kolbenpumpe, insbesondere Kraftstoff-Hochdruckpumpe für eine Brennkraftmaschine, weist ein Pumpengehäuse, einen im Pumpengehäuse (entlang einer Axialrichtung) geführten Pumpenkolben und einen zumindest von Pumpengehäuse und Pumpenkolben begrenzten Förderraum auf, wobei (radial) zwischen dem Pumpengehäuse und dem Pumpenkolben, bzw. mit anderen Worten am Umfang des Pumpenkolbens, eine Dichtung zur Abdichtung des Förderraums angeordnet ist. Die Dichtung ist als Dichtring mit einem im Wesentlichen hülsenförmigen, sich entlang einer Mittellängsachse erstreckenden Basisabschnitt ausgebildet und weist eine innere Umfangsfläche (innere Mantelfläche) auf. Der Dichtring ist mittels Spritzgießen aus faserverstärktem Kunststoff ausgebildet und an der inneren Umfangsfläche spanend bearbeitet.

Durch die spanende Bearbeitung der inneren Umfangsfläche wird erfindugsgemäß die Spritzhaut weitgehend oder vollständig entfernt. Somit können die Toleranzen des Innendurchmessers des Dichtrings reduziert und somit die Gesamtfunktion des Dichtrings bzw. der Kolbenpumpe verbessert werden.

Für den Dichtring können verschiedene Kunststoffe zum Einsatz kommen, bspw. thermoplastische Kunststoffe. Die Fasern (Verstärkungsfasern) können Glas und/oder Kohlefaser aufweisen oder aus Glas (GFK) und/oder Kohlefaser (CFK) ausgebildet sein. Das Spritzmaterial zur Herstellung des Dichtrings kann Kunststoff und Fasern aufweisen.

Gemäß einer Weiterbildung kann der Dichtring an der inneren Umfangsfläche derart spanend bearbeitet sein, dass an die innere Umfangsfläche angrenzende Fasern oder Faserabschnitte (Verstärkungsfasern des faserverstärkten Kunststoffs) freigelegt sind. Eine spanende Bearbeitung der inneren Umfangsfläche erfolgt somit in dem Maße, dass Fasern oder Faserabschnitte, die an die innere Umfangsfläche angrenzen, freigelegt werden. Somit liegt direkt an der inneren Umfangsfläche eine faserverstärkte Bauteilstruktur vor. Je nach Fasermaterial können die Fasern zu den tribologischen Eigenschaften der Oberfläche an der inneren Umfangsfläche des Dichtrings beitragen.

Gemäß einer Weiterbildung können die Fasern, d.h. die im Material des Dichtrings enthaltenen Verstärkungsfasern, als Kohlefasern ausgebildet sein. Die Kohlefasern können durch ihren guten Schmiereigenschaften zur Reduzierung der Reibung an der inneren Umfangsfläche beitragen. Somit können Reibungsverluste zwischen dem Pumpenkolben und der Dichtung minimiert werden.

Gemäß einer Weiterbildung kann die innere Umfangsfläche des Dichtrings durch Schleifen und/oder Hohnen bearbeitet werden. Dadurch kann eine geeignete mechanische Feinbearbeitung der inneren Umfangsfläche erfolgen. Damit kann die Oberfläche der Spritzhaut von bspw. ca. 0,02 bis 0,03 mm (Millimeter) entfernt werden.

Gemäß einer Weiterbildung können die Fasern zumindest entlang eines überwiegenden Teils des Umfangs des Dichtrings in Umfangsrichtung des Dichtrings orientiert sein. Auf diese Weise können die Festigkeit, das Quellverhalten und die Wärmeausdehnung des Dichtrings in Umfangsrichtung verbessert werden. Dies begünstigt eine zuverlässige Funktion des Dichtrings bzw. Kunststoffrings bei auftretenden Betriebsbedingungen. Die Fasern können bspw. zumindest zu 50 Prozent, vorzugweise zumindest zu 70 Prozent, weiter vorzugsweise zumindest zu 90 Prozent, des Umfangs des Dichtrings in Umfangsrichtung orientiert bzw. ausgerichtet sein.

Gemäß einer Weiterbildung können am Dichtring ein oder mehrere Stege ausgebildet sein, die sich jeweils parallel zur Mittellängsachse entlang der äußeren Umfangsfläche des Dichtrings erstrecken, insbesondere entlang der gesamten Länge der äußeren Umfangsfläche. Durch den oder die Stege kann die Struktur des Dichtrings bzw. des im Wesentlichen hülsenförmigen Basisabschnitts stabilisiert werden. Zudem können durch den oder die Stege eine Spritzeintrittsstelle (Eintritt Spritzmaterial) und (bspw. bei zwei Stegen) ggf. eine Spritzaustrittstelle (Austritt Spritzmaterial) realisiert werden (Spritzen in Umfangsrichtung). Somit sind diese Stellen außerhalb des im Wesentlichen hülsenförmigen Basisabschnitts, so dass die Stabilität des Rings nicht beeinträchtigt wird. Im Falle von zwei Stegen können diese an der äußeren Umfangsfläche einander gegenüberliegend, jedoch leicht versetzt zueinander angeordnet sein.

Gemäß einer Weiterbildung kann der Dichtring an einem axialen Ende oder jeweils an beiden axialen Enden einen radial nach außen abragenden, umlaufend ausgebildeten Bund aufweisen, der an den im Wesentlichen hülsenförmigen Basisabschnitt angeformt ist. Bei einem Bund an einem axialen Ende weist der Dichtring somit einen insgesamt L-förmigen Querschnitt auf bzw. bei jeweils einem Bund an beiden axialen Enden einen C-förmigen oder U-förmigen Querschnitt. Durch den Bund kann die Steifigkeit des Dichtrings erhöht werden. Zudem kann der Dichtring in radialer Richtung im Pumpengehäuse zentriert werden. Dadurch kann der Dichtring in einer festen Position im Pumpengehäuse verbaut werden. Weist der Dichtring nur an einem axialen Ende einen Bund auf, kann dieser dem Förderraum zugewandt oder vom Förderraum abgewandt sein.

Gemäß einer Weiterbildung können der oder die Stege und/oder der Bund an ihrem radial äußeren Rand zur Umfangswand der den Pumpenkolben aufnehmenden Ausnehmung jeweils ein (radiales) Spiel aufweisen, bspw. ein Spiel von 0,01 bis 1 mm (Millimeter). Mit anderen Worten weisen die genannten Elemente (der oder die Stege und/oder der Bund) ein Außenmaß, bspw. einen Außendurchmesser, auf, welches geringfügig kleiner ist als der Innendurchmesser der diese Elemente aufnehmenden Ausnehmung (Bohrung) an der Stelle, an der das jeweilige Element sitzt. Dieses Spiel bewirkt, dass sich die radiale Position des Elements auf die Position des Pumpenkolbens einstellen kann. Somit kann sich ein gleichmäßiger und symmetrischer Spalt zum Pumpenkolben ergeben.

Gemäß einer Weiterbildung können am Umfang des Pumpenkolbens, bzw. mit anderen Worten (radial) zwischen dem Pumpengehäuse und dem Pumpenkolben, ein auf den Dichtring wirkendes Federelement, ein oder mehrere Führungselemente, ein Befestigungsring, ein O-Ring und/oder ein Stützring vorgesehen sein.

Das Federelement kann auf den Dichtring wirken, bspw. den Dichtring gegen einen Befestigungsring drücken. Das Federelement kann einends axial, bspw. an einem Führungselement, anliegen und andernends den Dichtring gegen einen Befestigungsring drücken. Das Federelement kann als Druckfeder, insbesondere als Federscheibe oder Schraubenfeder, ausgebildet sein. Das Federelement kann den Pumpenkolben zumindest teilweise umgeben. Durch das Federelement wirkt eine axiale Kraft auf den Dichtring, wobei diese Kraft auf die dem Förderraum zugewandte axiale Stirnfläche des Dichtrings drückt. Die axiale Kraft bewirkt, dass der Dichtring bspw. auf dem Befestigungsring aufliegt, so dass eine initiale Dichtheit an der statischen Dichtstelle (bspw. Dichtstelle zwischen Dichtring und Befestigungsring) gewährleistet ist.

Das oder die Führungselemente dienen zur Führung des Pumpenkolbens entlang einer Axialrichtung relativ zum Gehäuse. Die Führungselemente können bspw. jeweils als Führungsring ausgebildet sein. Sind zwei Führungselemente vorgesehen, kann ein Führungselement im Pumpengehäuse, bspw. in der Ausnehmung für den Pumpenkolben, angeordnet sein und das weitere Führungselement kann in einem Dichtungsträger angeordnet sein.

Der Befestigungsring kann an der vom Förderraum abgewandten Seite des Dichtrings angeordnet sein. Der Befestigungsring kann einen Sitz für den Dichtring bilden, so dass der Dichtring gegen axiale Verschiebung gesichert ist, insbesondere vom Förderraum weg.

Der O-Ring kann radial dichtende Wirkung entfalten. Durch den O-Ring kann die statische Dichtstelle ergänzt und die Dichtungswirkung verbessert werden. Der O-Ring ist insbesondere zwischen der äußeren Umfangsfläche des Dichtrings und dem Pumpengehäuse (Umfangswand der Ausnehmung für den Pumpenkolben) angeordnet.

Der Stützring kann zwischen der äußeren Umfangsfläche des Dichtrings und dem Pumpengehäuse (Umfangswand der Ausnehmung für den Pumpenkolben) angeordnet sein und als Stützring für den O-Ring dienen. Dadurch wird der O-Ring geschützt, da eine Beschädigung, bspw. ein Extrudieren des O-Rings, verhindert werden kann. Der Stützring ist insbesondere an der vom Förderraum abgewandten Seite des O-Rings angeordnet und kann ein im Querschnitt dreieckiges Profil aufweisen. Die Hypothenuse des dreieckigen Profils kann dem O-Ring zugewandt sein.

Die Erfindung betrifft auch ein Verfahren zum Herstellen eines Dichtrings für eine Kolbenpumpe, insbesondere für eine Kolbenpumpe mit einem oder mehreren der voranstehend beschriebenen Aspekte. Hinsichtlich der Vorteile sei auf die diesbezüglichen Ausführungen zur Kolbenpumpe verwiesen. Das Verfahren weist die folgenden Schritte auf:
- Spritzgießen eines Rohlings des Dichtrings aus faserverstärktem Kunststoff, insbesondere aus mit Kohlefasern verstärktem Kunststoff (CFK), wobei der Dichtring einen im Wesentlichen hülsenförmigen, sich entlang einer Mittellängsachse erstreckenden Basisabschnitt und eine innere Umfangsfläche aufweist, und
- spanende Bearbeitung, insbesondere Schleifen und/oder Hohnen, der inneren Umfangsfläche des Dichtrings, wobei eine Materialschicht mit einer definierten Dicke abgetragen wird.

Die spanende Bearbeitung bzw. der Materialabtrag an der inneren Umfangsfläche erfolgt insbesondere derart, dass die (vom Spritzgießen zurückbleibende) Spritzhaut entfernt wird. Es wird an der inneren Umfangsfläche insbesondere eine Materialschicht mit einer Dicke von 0,02 bis 0,03 mm (Millimeter) abgetragen. Dadurch können die Fasern freigelegt werden, wobei die Toleranzen des Innendurchmessers des Dichtrings reduziert und die tribologischen Eigenschaften der Oberfläche der inneren Umfangsfläche verbessert werden. Sind die Fasern (Verstärkungsfasern) aus Kohlefaser ausgebildet, können die Kohlefasern mit ihren guten Schmiereigenschaften zur Reduzierung der Reibung beitragen.

Zur weiteren Ausgestaltung des Verfahrens bzw. des Dichtrings können die voranstehend beschriebenen und/oder die nachfolgend noch erläuterten Maßnahmen dienen.

Die Erfindung wird im Folgenden anhand der Figuren näher erläutert, wobei gleiche oder funktional gleiche Elemente mit identischen Bezugszeichen versehen sind, ggf. jedoch lediglich einmal. Es zeigen:
- Figur 1: eine schematische Darstellung eines Kraftstoffsystems mit einer Kraftstoff-Hochdruckpumpe in Form einer Kolbenpumpe;
- Figur 2: einen teilweisen Längsschnitt durch die Kolbenpumpe von Figur 1;
- Figur 3: eine vergrößerte Ansicht eines Pumpenkolbens, eines Dichtrings, eines Führungselements und eines Befestigungsrings der Kolbenpumpe aus Figur 1;
- Figur 4: eine Ausgestaltungsmöglichkeit des Dichtrings aus Figur 3 in einer vergrößerten Schnittansicht mit O-Ring und Stützring;
- Figur 5: der Dichtring der Kolbenpumpe aus Figur 2 in Alleinstellung in einer perspektivischen Ansicht;
- Figur 6: eine schematische Schnittansicht durch den Dichtring aus Figur 5 vor einer spanenden Bearbeitung der inneren Umfangsfläche (Figur 6a) und nach einer solchen Bearbeitung (Figur 6b); und
- Figur 7: eine Teilansicht sowie einen vergrößerten Ausschnitt der inneren Umfangsfläche des Dichtrings aus Figur 5.

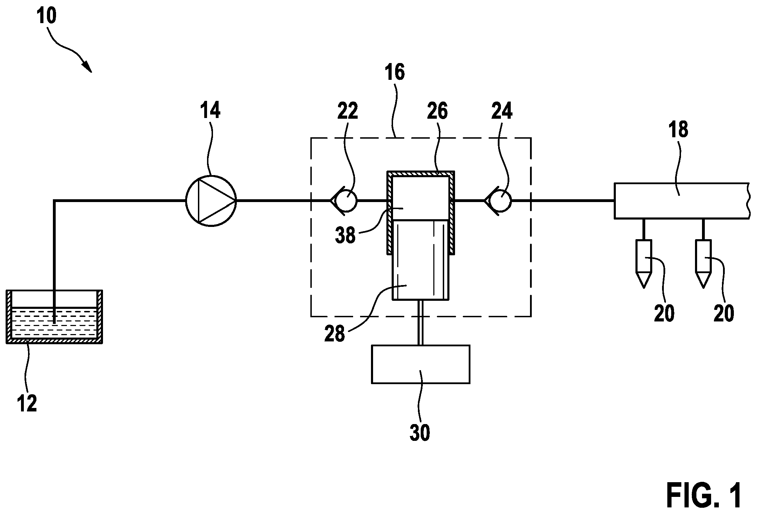

Ein Kraftstoffsystem einer Brennkraftmaschine trägt in Figur 1 insgesamt das Bezugszeichen 10. Es umfasst einen Kraftstoffbehälter 12, aus dem eine elektrische Vorförderpumpe 14 den Kraftstoff zu einer als Kolbenpumpe 16 ausgebildeten Kraftstoff-Hochdruckpumpe fördert. Diese fördert den Kraftstoff weiter zu einem Kraftstoff-Hochdruckrail 18, an welches mehrere Kraftstoffinjektoren 20 angeschlossen sind, die den Kraftstoff in nicht dargestellte Brennräume der Brennkraftmaschine einspritzen.

Die Kolbenpumpe 16 umfasst ein Einlassventil 22, ein Auslassventil 24, und ein Pumpengehäuse 26. In diesem ist ein Pumpenkolben 28 hin- und her bewegbar aufgenommen. Der Pumpenkolben 28 wird durch einen Antrieb 30 in Bewegung versetzt, wobei der Antrieb 30 in Figur 1 nur schematisch dargestellt ist. Es kann sich beim Antrieb 30 bspw. um eine Nockenwelle oder eine Exzenterwelle handeln. Das Einlassventil 22 ist bspw. als Mengensteuerventil ausgebildet, durch welches die von der Kolbenpumpe 16 geförderte Kraftstoffmenge eingestellt werden kann.

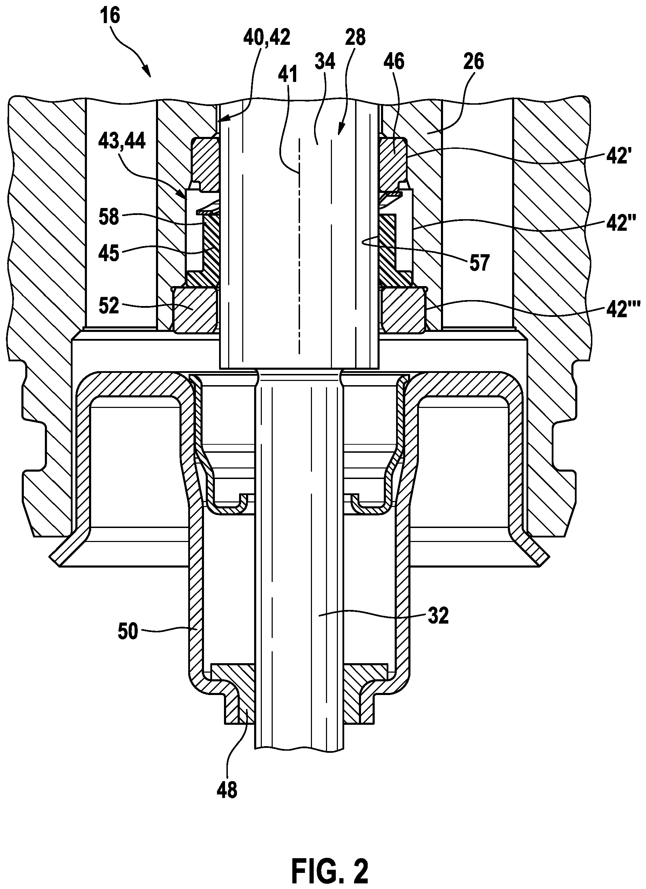

Der Aufbau der Kolbenpumpe 16 ergibt sich näher aus Figur 2, wobei nachfolgend nur die wesentlichen Komponenten erwähnt werden. Der Pumpenkolben 28 ist als Stufenkolben ausgebildet mit einem in Figur 2 unteren Stößelabschnitt 32, einem sich an diesen anschließenden Führungsabschnitt 34 und einem nicht näher dargestellten oberen Endabschnitt. Der Führungsabschnitt 34 hat einen größeren Durchmesser als der Stößelabschnitt 32 und der Endabschnitt.

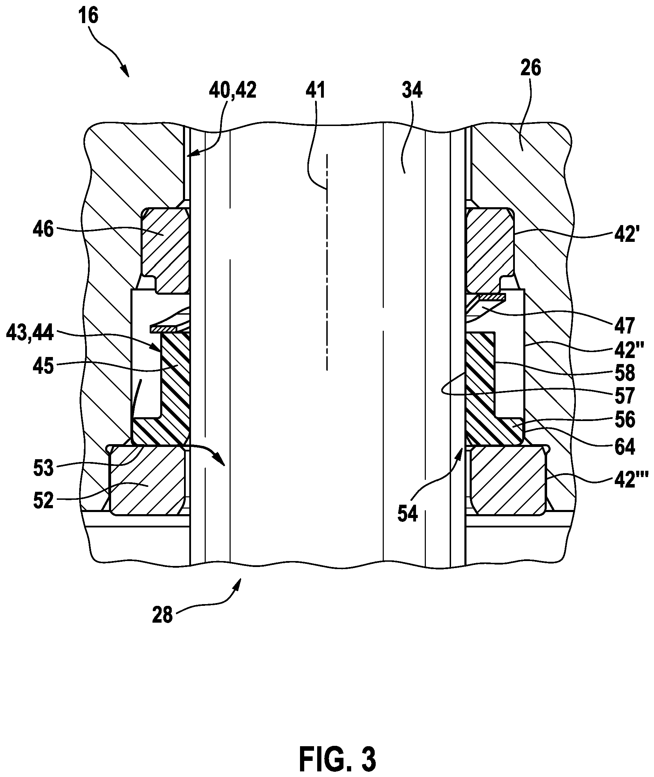

Der Endabschnitt sowie der Führungsabschnitt 34 des Pumpenkolbens 28 begrenzen zusammen mit dem Pumpengehäuse 26 einen nicht näher dargestellten Förderraum 38. Das Pumpengehäuse 26 kann als ein insgesamt rotationssymmetrisches Teil ausgebildet sein. Der Pumpenkolben 28 ist im Pumpengehäuse 26 in einer dort vorhandenen Ausnehmung 40 aufgenommen, die als gestufte Bohrung 42 ausgebildet ist. Die Bohrung 42 weist mehrere Stufen auf (drei Stufen 42', 42", 42"'; siehe Figur 2 und 3).

Zwischen dem Führungsabschnitt 34 des Pumpenkolbens 28 und einer inneren Umfangswand der Bohrung 42 (Stufe 42") ist eine Dichtung 43 angeordnet. Sie dichtet unmittelbar zwischen dem Pumpenkolben 28 und dem Pumpengehäuse 26, und dichtet somit den sich oberhalb der Dichtung 43 befindlichen Förderraum (Hochdruckbereich) gegenüber dem in Figur 2 unterhalb der Dichtung 43 angeordneten Bereich (Niederdruckbereich) ab, in dem sich u.a. der Stößelabschnitt 32 des Pumpenkolbens 28 befindet.

Die Dichtung 43 ist als Dichtring 44 mit einem im Wesentlichen hülsenförmigen, sich entlang einer Mittellängsachse 41 erstreckenden Basisabschnitt 45 ausgebildet. Der Dichtring 44 weist am Basisabschnitt 45 eine innere Umfangsfläche 57 und eine äußere Umfangsfläche 58 auf (vgl. Fig.3). Der Dichtring 44 ist mittels Spritzgießen aus faserverstärktem Kunststoff ausgebildet und an der inneren Umfangsfläche 57 spanend bearbeitet. Die Ausgestaltung des Dichtrings 44 wird weiter unten näher erläutert.

Zwischen dem Führungsabschnitt 34 des Pumpenkolbens 28 und der inneren Umfangswand der Bohrung 42 (Stufe 42') ist im Beispiel ein vom Dichtring 44 separates Führungselement 46 angeordnet (vgl. Fig.2 und 3). Das Führungselement 46 kann zum Dichtring 44 axial benachbart sein und ist in Figur 2 oberhalb des Dichtrings 44 angeordnet (dem Förderraum zugewandt). Das Führungselement 46 ist ringförmig ausgebildet (Führungsring) und kann an der Stufe 42' befestigt sein.

Die Kolbenpumpe 16 weist im Beispiel ein weiteres Führungselement 48 auf, welches in einem Dichtungsträger 50 der Kolbenpumpe 16 angeordnet ist (vgl. Fig. 2). Das Führungselement 46 und das weitere Führungselement 48 dienen zur Führung des Pumpenkolbens 28. Das weitere Führungselement 48 ist ringförmig ausgebildet (Führungsring) und kann am Dichtungsträger 50 befestigt sein.

Die Kolbenpumpe 16 weist zwischen dem Führungsabschnitt 34 des Pumpenkolbens 28 und der inneren Umfangswand der Bohrung 42 (Stufe 42'") einen Befestigungsring 52 für den Dichtring 44 auf. Der Dichtring 44 liegt auf dem Befestigungsring 52 auf. Durch die aufliegenden Kontaktflächen von Dichtring 44 und Befestigungsring 52 wird eine statische Dichtstelle 53 ausgebildet (siehe Figur 3). Der Dichtring 44, das Führungselement 46, das weitere Führungselement 48 und der Befestigungsring 52 bilden eine Dichtungsbaugruppe.

Der Dichtring 44 weist an seinem ersten axialen Ende 54 einen radial nach außen abragenden, umlaufend ausgebildeten Bund 56 auf (vgl. Fig. 3), der vom Basisabschnitt 45 abragt. Der Bund 56 steht über die äußere Umfangsfläche 58 radial hervor. Der Bund 56 umläuft den Dichtring 44 vollständig. Der Bund 56 weist an seinem radial äußeren Rand zur Umfangswand der den Pumpenkolben 28 aufnehmenden Ausnehmung 40 (Stufe 42") ein radiales Spiel 64 auf (vgl. Fig. 3). Dadurch kann sich der Dichtring 44 in radialer Richtung zum Pumpenkolben 28 ausrichten.

Der im Förderraum 38 herrschende Druck kann zur äußeren Umfangsfläche 58 des Dichtrings 44 gelangen, so dass die Dichtungswandung am hülsenförmigen Abschnitt 45 aufgrund der dort wirkenden Kraft nach radial innen eine Verformung erfährt (nicht gezeigt). Somit kann sich zwischen Pumpenkolben 28, insbesondere zwischen dem Führungsabschnitt 34, und dem Dichtring 44 (radial innenliegender Ringrand) eine dynamische Dichtstelle ausbilden.

Optional kann zwischen dem Pumpenkolben 28 und dem Pumpengehäuse 26 ein Federelement 47 angeordnet sein, welches den Dichtring 44 gegen den Befestigungsring 52 drückt. Das Federelement 47 kann in Axialrichtung des Pumpenkolbens 28 zwischen dem Führungselement 46 und dem Dichtring 44 angeordnet sein. Das Federelement 47 kann als Druckfeder in Form einer Federscheibe oder Schraubenfeder ausgebildet sein. Das Federelement 47 liegt einends axial an, insbesondere am Führungselement 46, und drückt andernends den Dichtring 44 gegen den Befestigungsring 52.

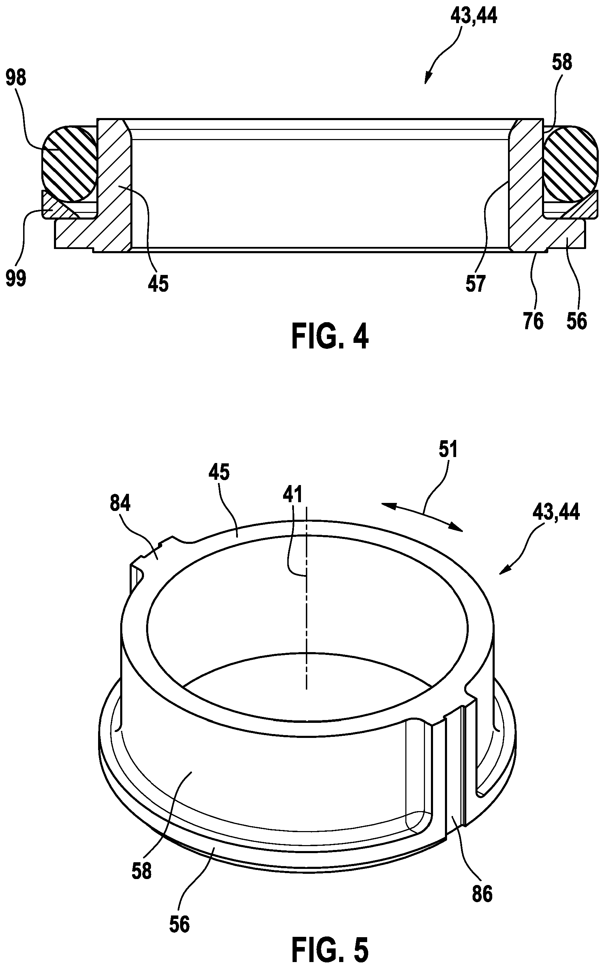

Zwischen der radial äußeren Umfangsfläche 58 des Dichtrings 44 und dem Pumpengehäuse 26 kann optional ein O-Ring 98 angeordnet sein (vgl. Fig. 4). Dieser dient zur Verstärkung der statischen Dichtstelle 53 und verbessert die Abdichtung. Zudem kann zwischen der radial äußeren Umfangsfläche 58 des Dichtrings 44 in dem Pumpenkolben 26 ein Stützring 99 für den O-Ring 98 angeordnet sein (vgl. Fig. 4). Der Stützring 99 dient zum Schutz des O-Rings 98, bspw. um ein Extrudieren des O-Rings 98 zu vermeiden.

Unabhängig davon kann am Dichtring 44 optional ein umlaufender Axialbund 76 angeordnet sein (vgl. Fig. 4). Der Axialbund 76 kann an die radial innere Umfangsfläche 57 angrenzen. Damit ist sichergestellt, dass die Kraft optimal durch den Dichtring 44 verläuft und exakt in die statische Dichtstelle 53 eingeleitet wird (vgl. Fig. 3).

Die weitere Ausgestaltung und Herstellung des Dichtrings 44 werden nachfolgend unter Bezugnahme auf die Figuren 5 bis 7 erläutert.

Am Dichtring 44 ist ein Steg 84 ausgebildet, der sich im Beispiel parallel zur Mittellängsachse 41 des Dichtrings 44 entlang der äußeren Umfangsfläche 58 des Dichtrings 44 erstreckt, und zwar entlang der gesamten Länge der äußeren Umfangsfläche 58 (vgl. Fig. 5). Zudem ist am Dichtring 44 ein weiterer Steg 86 ausgebildet, der sich parallel zur Mittellängsachse 41 des Dichtrings 44 entlang der äußeren Umfangsfläche 58 des Dichtrings 44 erstreckt, und zwar entlang der gesamten Länge der äußeren Umfangsfläche 58 (vgl. Fig. 5). Am Steg 84 kann eine Spritzeintrittsstelle vorgesehen sein und am weiteren Steg 86 kann eine Spitzaustrittsstelle vorgesehen sein, wie oben erläutert.

Im Beispiel gehen der Steg 84 und der weitere Steg 86 in den umlaufenden Bund 56 über (vgl. Fig. 5). Der Steg 84 und der weitere Steg 86 ragen im Beispiel gleich weit relativ zur äußeren Umfangsfläche 58 ab wie der Bund 56. Der Steg 84, der weitere Steg 86 und der Bund 56 weisen an ihrem radial äußeren Rand zur Umfangswand der den Pumpenkolben 28 aufnehmenden Ausnehmung 40 ein Spiel auf.

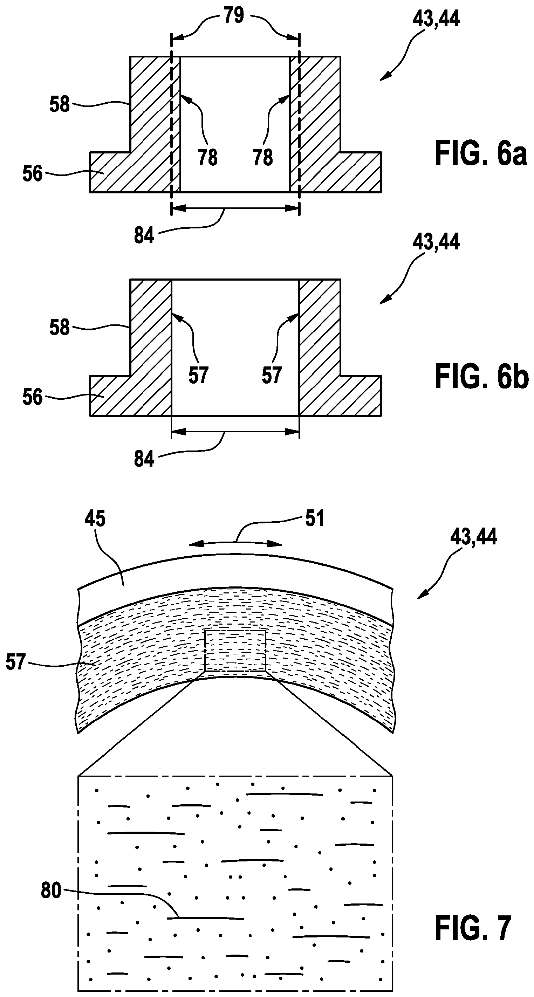

Wie zuvor bereits erläutert, ist der Dichtring 44 mittels Spritzgießen aus faserverstärktem Kunststoff ausgebildet und an der inneren Umfangsfläche 57 spanend bearbeitet. Bei dieser spanenden Bearbeitung (gekennzeichnet durch Bezugszeichen 79) wird an der inneren Umfangsfläche 57 des Dichtrings 44 eine Materialschicht 78 mit einer definierten Dicke abgetragen (vgl. Fig.6a). Nach dieser Bearbeitung sind an die innere Umfangsfläche 57 des Dichtrings 44 angrenzende Fasern oder Faserabschnitte 80 (Verstärkungsfasern des faserverstärkten Kunststoffs) freigelegt (vgl. Fig.7). Infolge der spanenden Bearbeitung (Abtragen der Materialschicht 78) ist der Innendurchmesser 84 des Dichtrings 44 geringfügig vergrößert (vgl. Fig.6b).

Die Fasern 80 sind im Beispiel als Kohlefasern ausgebildet. Die innere Umfangsfläche 57 kann durch Schleifen und/oder Hohnen spanend bearbeitet sein. Die Fasern 80 sind zumindest entlang eines überwiegenden Teils des Umfangs des Dichtrings 44 in Umfangsrichtung 51 des Dichtrings 44 orientiert (vgl. Fig.7).

Das Verfahren zum Herstellen des Dichtrings 44 für eine Kolbenpumpe 16 wie oben beschrieben läuft folgendermaßen ab.

Zunächst erfolgt ein Spritzgießen eines Rohlings des Dichtrings 44 aus faserverstärktem Kunststoff, so dass der Dichtring 44 einen im Wesentlichen hülsenförmigen, sich entlang einer Mittellängsachse 41 erstreckenden Basisabschnitt 45 und eine innere Umfangsfläche 57 aufweist (vgl. Fig.6a).

Weiter erfolgt eine spanende Bearbeitung 79 der inneren Umfangsfläche 57 des Dichtrings 44, bspw. durch Schleifen und/oder Hohnen, wobei eine Materialschicht 78 mit einer definierten Dicke abgetragen wird (vgl. Fig.6b).

Dadurch wird die "Spritzhaut" an der inneren Umfangsfläche 57 entfernt und die Fasern 80, im Beispiel Kohlefasern 80, werden freigelegt und können somit ihren guten Schmiereigenschaften zur Reduzierung der Reibung an der inneren Umfangsfläche 57 bzw. zwischen der inneren Umfangsfläche 57 und dem Umfang des Pumpenkolben 28 beitragen. Zudem werden durch die spanende Bearbeitung der inneren Umfangsfläche 57 die Toleranzen des Innendurchmessers 84 des Dichtrings 44 reduziert und die Gesamtfunktion verbessert.

## Patentansprüche

1. Kolbenpumpe (16), insbesondere Kraftstoff-Hochdruckpumpe für eine Brennkraftmaschine, mit einem Pumpengehäuse (26), einem im Pumpengehäuse (26) geführten Pumpenkolben (28) und einem zumindest vom Pumpengehäuse (26) und dem Pumpenkolben (28) begrenzten Förderraum (38), wobei zwischen Pumpengehäuse (26) und Pumpenkolben (28) eine Dichtung (43) zur Abdichtung des Förderraums (38) angeordnet ist, wobei die Dichtung (43) als Dichtring (44) mit einem im Wesentlichen hülsenförmigen, sich entlang einer Mittellängsachse (41) erstreckenden Basisabschnitt (45) ausgebildet ist und eine innere Umfangsfläche (57) aufweist, **dadurch gekennzeichnet, dass** der Dichtring (44) mittels Spritzgießen aus faserverstärktem Kunststoff ausgebildet und an der inneren Umfangsfläche (57) spanend bearbeitet ist, wodurch eine nach dem Spritzgießen verbleibende Spritzhaut im Bereich der inneren Umfangsfläche (57) weitgehend oder vollständig entfernt ist.

2. Kolbenpumpe (16) nach Anspruch 1, **dadurch gekennzeichnet, dass** der Dichtring (44) an der inneren Umfangsfläche (57) derart spanend bearbeitet ist, dass an die innere Umfangsfläche (57) angrenzende Fasern oder Faserabschnitte (80) freigelegt sind.

3. Kolbenpumpe (16) nach Anspruch 1 oder 2, **dadurch gekennzeichnet, dass** die Fasern (80) als Kohlefasern ausgebildet sind.

4. Kolbenpumpe (16) nach einem der voranstehenden Ansprüche, **dadurch gekennzeichnet, dass** die innere Umfangsfläche (57) durch Schleifen und/oder Honen spanend bearbeitet ist.

5. Kolbenpumpe (16) nach einem der voranstehenden Ansprüche, **dadurch gekennzeichnet, dass** die Fasern (80) zumindest entlang eines überwiegenden Teils des Umfangs des Dichtrings (44) in Umfangsrichtung (51) des Dichtrings (44) orientiert sind.

6. Kolbenpumpe (16) nach einem der voranstehenden Ansprüche, **dadurch gekennzeichnet, dass** am Dichtring (44) ein oder mehrere Stege (84, 86) ausgebildet sind, die sich jeweils parallel zur Mittellängsachse (41) entlang der äußeren Umfangsfläche (58) des Dichtrings (44) erstrecken, insbesondere entlang der gesamten Länge der äußeren Umfangsfläche (58).

7. Kolbenpumpe (16) nach einem der voranstehenden Ansprüche, **dadurch gekennzeichnet, dass** der Dichtring (44) an einem axialen Ende (54) oder jeweils an beiden axialen Enden einen radial nach außen abragenden, umlaufend ausgebildeten Bund (56) aufweist, der an den im Wesentlichen hülsenförmigen Basisabschnitt (45) angeformt ist.

8. Kolbenpumpe (16) nach einem der voranstehenden Ansprüche, **dadurch gekennzeichnet, dass** der oder die Stege (84, 86) und/oder der Bund (56) an ihrem radial äußeren Rand zur Umfangswand der den Pumpenkolben (28) aufnehmenden Ausnehmung (40) jeweils ein Spiel aufweisen.

9. Kolbenpumpe (16) nach einem der voranstehenden Ansprüche, **dadurch gekennzeichnet, dass** am Umfang des Pumpenkolbens (28) ein auf den Dichtring (44) wirkendes Federelement (47), ein oder mehrere Führungselemente (46, 48), ein Befestigungsring (52), ein O-Ring (98) und/oder ein Stützring (99) vorgesehen sind.

10. Verfahren zum Herstellen einer Kolbenpumpe (16) nach einem der voranstehenden Ansprüche, mit den folgenden Schritten:
- Spritzgießen eines Rohlings des Dichtrings (44) aus faserverstärktem Kunststoff, wobei der Dichtring (44) einen im Wesentlichen hülsenförmigen, sich entlang einer Mittellängsachse (41) erstreckenden Basisabschnitt (45) und eine innere Umfangsfläche (57) aufweist,
- spanende Bearbeitung der inneren Umfangsfläche (57) des Dichtrings (44), wobei eine Materialschicht (78) mit einer definierten Dicke abgetragen wird, wodurch eine nach dem Spritzgießen verbleibende Spritzhaut im Bereich der inneren Umfangsfläche (57) weitgehend oder vollständig entfernt wird.

## Claims

1. Piston pump (16), in particular a high-pressure fuel pump for an internal combustion engine, having a pump housing (26), having a pump piston (28) which is guided in the pump housing (26), and having a delivery chamber (38) which is delimited at least by the pump housing (26) and the pump piston (28), wherein a seal (43) for sealing off the delivery chamber (38) is arranged between the pump housing (26) and the pump piston (28), wherein the seal (43) is in the form of a sealing ring (44) with a substantially sleeve-shaped base portion (45) extending along a central longitudinal axis (41) and has an inner circumferential surface (57), **characterized in that** the sealing ring (44) is formed from fibre-reinforced plastic by means of injection moulding and has been subjected to cutting machining at the inner circumferential surface (57), whereby an injection-moulding skin in the region of the inner circumferential surface (57) that remains after the injection moulding has been largely or completely removed.

2. Piston pump (16) according to Claim 1, **characterized in that** the sealing ring (44) has been subjected to cutting machining at the inner circumferential surface (57) in such a way that fibres or fibre portions (80) adjacent to the inner circumferential surface (57) are exposed.

3. Piston pump (16) according to Claim 1 or 2, **characterized in that** the fibres (80) are in the form of carbon fibres.

4. Piston pump (16) according to one of the preceding claims, **characterized in that** the inner circumferential surface (57) has been subjected to cutting machining by grinding and/or honing.

5. Piston pump (16) according to one of the preceding claims, **characterized in that**, at least along most of the circumference of the sealing ring (44), the fibres (80) are oriented in a circumferential direction (51) of the sealing ring (44).

6. Piston pump (16) according to one of the preceding claims, **characterized in that**, on the sealing ring (44), there are formed one or more webs (84, 86) which each extend along the outer circumferential surface (58) of the sealing ring (44), in particular along the entire length of the outer circumferential surface (58), parallel to the central longitudinal axis (41).

7. Piston pump (16) according to one of the preceding claims, **characterized in that** the sealing ring (44) has a radially outwardly projecting encircling collar (56) at one axial end (54), or at both axial ends in each case, said collar being integrally formed on the substantially sleeve-shaped base portion (45).

8. Piston pump (16) according to one of the preceding claims, **characterized in that** the web(s) (84, 86) and/or the collar (56) each have/has an amount of play at the radially outer periphery thereof in relation to the circumferential wall of the cutout (40) that accommodates the pump piston (28).

9. Piston pump (16) according to one of the preceding claims, **characterized in that** a spring element (47) acting on the sealing ring (44), one or more guide elements (46, 48), a fastening ring (52), an O-ring (98) and/or a supporting ring (99) are/is provided on the circumference of the pump piston (28).

10. Method for producing a piston pump (16) according to one of the preceding claims, comprising the following steps:
- injection-moulding a blank of the sealing ring (44) from fibre-reinforced plastic, wherein the sealing ring (44) has a substantially sleeve-shaped base portion (45) extending along a central longitudinal axis (41) and has an inner circumferential surface (57),
- subjecting the inner circumferential surface (57) of the sealing ring (44) to cutting machining, wherein a material layer (78) with a defined thickness is stripped away, whereby an injection-moulding skin in the region of the inner circumferential surface (57) that remains after the injection moulding is largely or completely removed.

## Revendications

1. Pompe à piston (16), notamment pompe à carburant haute pression pour un moteur à combustion interne, avec un boîtier de pompe (26), un piston de pompe (28) guidé dans le boîtier de pompe (26) et une chambre de refoulement (38) délimitée au moins par le boîtier de pompe (26) et le piston de pompe (28), un joint d'étanchéité (43) étant agencé entre le boîtier de pompe (26) et le piston de pompe (28) pour assurer l'étanchéité de la chambre de refoulement (38), le joint d'étanchéité (43) étant réalisé sous forme de bague d'étanchéité (44) avec une section de base (45) essentiellement en forme de douille, s'étendant le long d'un axe longitudinal central (41) et présentant une surface périphérique intérieure (57), **caractérisée en ce que** la bague d'étanchéité (44) est réalisée par moulage par injection en matière plastique renforcée par des fibres et est usinée par enlèvement de copeaux sur la surface périphérique intérieure (57), ce qui permet d'éliminer en grande partie ou complètement une peau d'injection restant après le moulage par injection dans la zone de la surface périphérique intérieure (57).

2. Pompe à piston (16) selon la revendication 1, **caractérisée en ce que** la bague d'étanchéité (44) est usinée par enlèvement de copeaux sur la surface périphérique intérieure (57) de telle sorte que des fibres ou des sections de fibres (80) adjacentes à la surface périphérique intérieure (57) sont exposées.

3. Pompe à piston (16) selon la revendication 1 ou 2, **caractérisée en ce que** les fibres (80) sont réalisées sous forme de fibres de carbone.

4. Pompe à piston (16) selon l'une quelconque des revendications précédentes, **caractérisée en ce que** la surface périphérique intérieure (57) est usinée par enlèvement de copeaux par meulage et/ou rodage.

5. Pompe à piston (16) selon l'une quelconque des revendications précédentes, **caractérisée en ce que** les fibres (80) sont orientées dans la direction périphérique (51) de la bague d'étanchéité (44) au moins le long d'une partie prépondérante de la périphérie de la bague d'étanchéité (44).

6. Pompe à piston (16) selon l'une quelconque des revendications précédentes, **caractérisée en ce qu'**une ou plusieurs nervures (84, 86) sont réalisées sur la bague d'étanchéité (44), lesquelles s'étendent respectivement parallèlement à l'axe longitudinal central (41) le long de la surface périphérique extérieure (58) de la bague d'étanchéité (44), notamment le long de toute la longueur de la surface périphérique extérieure (58).

7. Pompe à piston (16) selon l'une quelconque des revendications précédentes, **caractérisée en ce que** la bague d'étanchéité (44) présente, à une extrémité axiale (54) ou respectivement aux deux extrémités axiales, un collet (56) réalisé sous forme circonférentielle faisant saillie radialement vers l'extérieur, qui est formé sur la section de base (45) essentiellement en forme de douille.

8. Pompe à piston (16) selon l'une quelconque des revendications précédentes, **caractérisée en ce que** la ou les nervures (84, 86) et/ou le collet (56) présentent chacun un jeu sur leur bord radialement extérieur par rapport à la paroi périphérique de l'évidement (40) recevant le piston de pompe (28).

9. Pompe à piston (16) selon l'une quelconque des revendications précédentes, **caractérisée en ce que** sur la périphérie du piston de pompe (28) sont prévus un élément de ressort (47) agissant sur la bague d'étanchéité (44), un ou plusieurs éléments de guidage (46, 48), une bague de fixation (52), un joint torique (98) et/ou une bague d'appui (99).

10. Procédé de fabrication d'une pompe à piston (16) selon l'une quelconque des revendications précédentes, avec les étapes suivantes :
- le moulage par injection d'une ébauche de la bague d'étanchéité (44) en matière plastique renforcée par des fibres, la bague d'étanchéité (44) présentant une section de base (45) essentiellement en forme de douille s'étendant le long d'un axe longitudinal central (41) et une surface périphérique intérieure (57),
- l'usinage par enlèvement de copeaux de la surface périphérique intérieure (57) de la bague d'étanchéité (44), une couche de matériau (78) d'une épaisseur définie étant enlevée, ce qui permet d'éliminer en grande partie ou complètement une peau d'injection restant après le moulage par injection dans la zone de la surface périphérique intérieure (57).
